# EUROPÄISCHE PATENTANMELDUNG

(11) **EP 3 097 766 A1**
(43) Veröffentlichungstag der Anmeldung: **30.11.2016**
(21) Anmeldenummer: 16171551.1
(22) Anmeldetag: 26.05.2016
(51) Int. Cl.: A01D 90/14

(54) **GETRIEBEANORDNUNG FÜR EINEN LADEWAGEN FÜR HALM- UND BLATTGUT**

(30) Priorität: 27.05.2015 DE 202015102739 U
(71) Anmelder: B. Strautmann & Söhne GmbH u. Co. KG, 49196 Bad Laer (DE)
(72) Erfinder: Kleine-Niesse, Richard, 49536 Lienen (DE)
(74) Vertreter: Träger, Denis

(57) **Zusammenfassung**

Die Erfindung betrifft eine Getriebeanordnung für einen Ladewagen (100) für Halm- und Blattgut, umfassend:
- ein von einer ersten Antriebswelle (11) antreibbares Eingangsgetriebe (1),
- ein über eine zweite Antriebswelle (12) an das Eingangsgetriebe (1) gekoppeltes Stirnradgetriebe (2), welches eine Zentral-Antriebswelle (13) umfasst,
- ein über die Zentral-Antriebswelle (13) an das Stirnradgetriebe (2) gekoppeltes Planetengetriebe (3) zum Antrieb eines Förderrotors (21),
- wenigstens ein von der ersten Antriebswelle (11) antreibbares Winkelgetriebe (5, 6) zum Antrieb eines Arbeitsaggregats (25).

Die Arbeitsaggregate bekannter Ladewagen werden im Allgemeinen von einem vorgeschalteten Winkelgetriebe angetrieben, wobei sich zum Antrieb aller Arbeitsaggregate mehrere separate Antriebsstränge ergeben, die mit weiteren Getrieben, wie Ketten- oder Riementrieben ausgestattet sind. Die Anzahl der Antriebsstränge ergibt eine verzweigte und aus zahlreichen Bauteilen bestehende Bauweise.

Aufgabe der Erfindung ist es, die Getriebeanordnung insgesamt kompakter zu gestalten sowie die Anzahl der Bauteile zu reduzieren. Diese Aufgabe wird gelöst durch eine Getriebeanordnung nach dem Oberbegriff des Anspruchs 1, bei der wenigstens ein Arbeitsaggregat (25) über ein Schaltgetriebe (4) an das Stirnradgetriebe (2) gekoppelt ist und über die Zentral-Antriebswelle (13) sowohl das Planetengetriebe (3) als auch das Schaltgetriebe (4) antreibbar sind.

## Beschreibung

Die Erfindung betrifft eine Getriebeanordnung für einen Ladewagen für Halm- und Blattgut nach dem Oberbegriff des Anspruchs 1 sowie einen mit einer solchen Getriebeanordnung ausgerüsteten Ladewagen.

Derartige Getriebeanordnungen werden an Ladewagen zum Antrieb der Arbeitsaggregate, wie z. B. Pick-up, Förderrotor und Dosierwalzengerät verwendet.

Die Arbeitsaggregate werden bei bekannten Ausführungen im Allgemeinen von einem vorgeschalteten Winkelgetriebe angetrieben, wobei sich zum Antrieb aller Arbeitsaggregate mehrere separate Antriebsstränge ergeben, die mit weiteren Getrieben, wie Ketten- oder Riementrieben ausgestattet sind. Die Anzahl der Antriebsstränge ergibt eine verzweigte und aus zahlreichen Bauteilen bestehende Bauweise.

Eine nach der DE 20 2009 005 827 U1 bekannte Ausführung der genannten Art zeigt eine Getriebeanordnung eines von einem Schlepper gezogenen Ladewagens, dessen Eingangsgetriebe, hier Zentralgetriebe genannt, über eine erste Antriebswelle in bekannter Weise mit dem Schlepper verbunden ist und über eine weitere Antriebswelle ein seitlich angeordnetes Winkelgetriebe antreibt. Dieses ist mittels eines seiner zwei Abtriebszapfen mit einer Fördertrommel und einer zugeordneten Aufnahmetrommel und mit dem weiteren Antriebszapfen mit einem Dosiergerät gekoppelt.

Zur gegenüberliegenden Seite des Ladewagens führt vom Zentralgetriebe eine Zweitantriebswelle zu einer weiteren, nicht näher dargestellten Getriebeanordnung zum Antrieb eines Förderrotors.

Diese Getriebeanordnung besteht aus einer hohen Anzahl von Bauteilen, deren Herstellungs- und Montagekosten hoch sind. Ferner ergibt die vorhandene beidseitige Antriebsanordnung durch ihren Raumbedarf, da die Breite des Ladewagens auf Grund gesetzlicher Vorgaben eine vorgegebene Breite nicht überschreiten darf, eine Einengung der Breite der Arbeitsaggregate.

Aus DD 135268 A1 ist eine Getriebeanordnung für Landmaschinen bekannt, bei welcher mit Hilfe eines zusätzlich angeordneten schaltbaren Getriebes wahlweise verschiedene Getriebevarianten eines Landmaschinen-Verteilergetriebes realisiert werden. Hierbei ist ein schaltbares Zusatzgetriebe lösbar auf das Verteilergetriebe 1 aufgesetzt und an das freie Ende einer Antriebswelle 3 gekoppelt. Bei dem Zusatzgetriebe kann es sich um ein Planetengetriebe 2 oder um ein Stirnradgetriebe 13 handeln. Dass zusätzlich zu Verteilergetriebe 1 und Planetengetriebe 2 bzw. Stirnradgetriebe 13 ein drittes Getriebe an die Antriebswelle 3 gekoppelt ist, ist nicht vorgesehen.

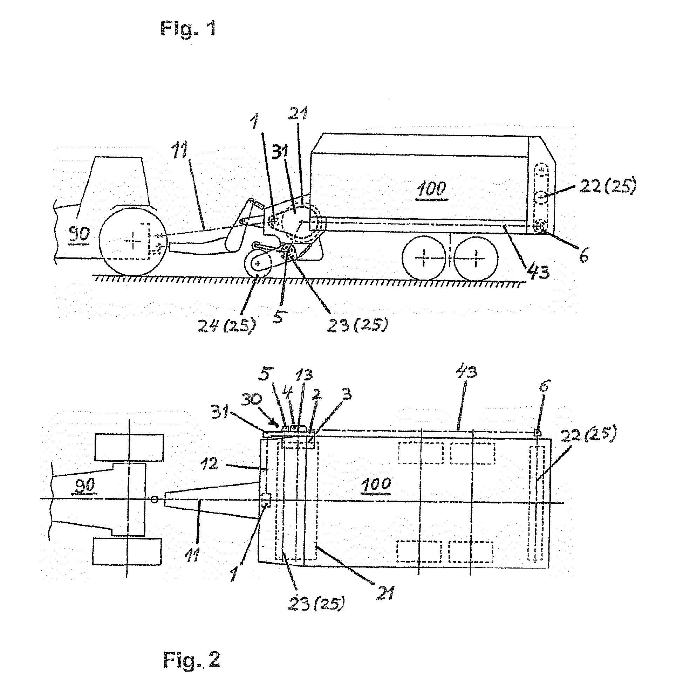

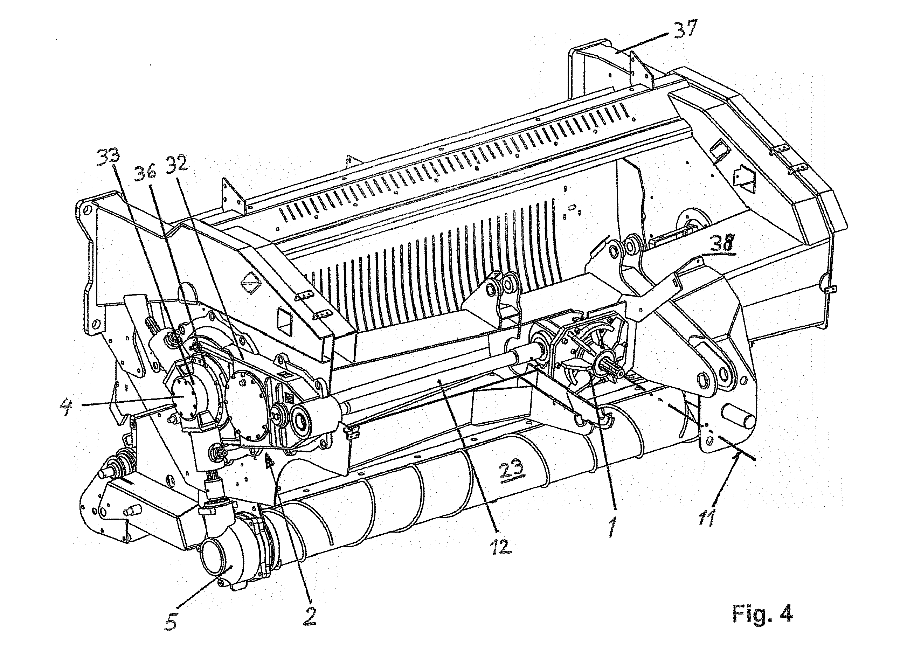

Aus EP 2 457 432 B1 ist eine Getriebeanordnung für ein landwirtschaftliches Arbeitsgerät bekannt, welche einen rotierend anzutreibenden Laderotor aufweist. Die dort enthaltene Figur 1 zeigt, dass die Getriebeanordnung ein von einer Zapfwelle antreibendes Winkelgetriebe 17 umfasst, welches ein dem Arbeitsrotor 3 vorgeschaltetes Seitengetriebe 16 antreibt. Das Seitengetriebe 16 treibt ein Planetengetriebe 11 an, welches innerhalb des Arbeitsrotors 3 angeordnet ist. Nach weiteren Ausführungsbeispielen kann innerhalb des Arbeitsrotors 3 ein weiteres Planetengetriebe 23 integriert sein. Soweit zwei Planetengetriebe 11 vorgesehen sind, kann der Antrieb des zweiten Planetengetriebes 23 ausgehend vom ersten Planetengetriebe 11 mittels einer Verbindungswelle 24 durch den Arbeitsrotor hindurch erfolgen vergl. Fig. 4. Alternativ hierzu wird in Fig. 5 auch eine Ausführungsform mit einem zweiten Stirnrad-Seitengetriebe 27 offenbart, welches das zweite Planetengetriebe 23 antreibt.

Antriebsstränge zu einem Dosiergerät oder zu einer Pick-up sind nicht dargestellt, es wird jedoch offenbart, dass, soweit es sich bei dem landwirtschaftlichen Arbeitsgerät um einen Ladewagen mit einer Pick-up handelt, ein Seitengetriebe zusätzlich zum Antrieb einer Pick-up ausgebildet sein kann. In diesem Fall umfasst der Ladewagen somit ein Seitengetriebe zum Antrieb des Arbeitsrotors und ein weiteres Seitengetriebe zum Antrieb der Pick-up. EP 2 457 432 B1 offenbart nicht, dass ausgehend von einem einzigen Seitengetriebe, sowohl der Arbeitsrotor als auch eine Pick-up antreibbar sind. Nachteilig hierbei ist, dass der Antrieb von Arbeitsrotor und Pick-up separate Antriebsstränge und Getriebegehäuse erfordern.

Aufgabe der Erfindung ist es, die beschriebenen Nachteile zu beseitigen und die Getriebeanordnung insgesamt kompakter zu gestalten sowie die Anzahl der Bauteile zu reduzieren.

Diese Aufgabe wird gelöst durch eine Getriebeanordnung nach dem Oberbegriff des Anspruchs 1, bei der ein Schaltgetriebe an das Stirnradgetriebe gekoppelt wird und über die Zentral-Antriebswelle des Stirnradgetriebes sowohl das Planetengetriebe als auch das Schaltgetriebe antreibbar sind.

Die erfindungsgemäße Aufgabe wird auch gelöst durch einen Ladewagen, der mit der beschriebenen Getriebeanordnung ausgestattet ist.

Das an das Stirnradgetriebe gekoppelte Schaltgetriebe dient zum Antrieb weiterer am Ladewagen vorgesehener Arbeitsaggregate. Bei diesen weiteren Arbeitsaggregaten kann es sich beispielsweise um ein Dosierwalzenaggregat, eine Fördertrommel und/oder eine Pickup handeln. Bei den als Stand der Technik bekannten Getriebeanordnungen treibt dagegen das Stirnradgetriebe ausschließlich den Förderrotor an, so dass zum Antrieb der genannten Arbeitsaggregate separate Antriebsstränge erforderlich sind. Die Antriebswelle des Stirnradgetriebes, die in bekannter Weise ein Planetengetriebe zum Antrieb des Förderrotors antreibt, umfasst somit erfindungsgemäß einen zusätzlichen Abtrieb zum Antrieb der Arbeitsaggregate.

In einer bevorzugten Ausführung sind Stirnradgetriebe, Planetengetriebe und Schaltgetriebe nicht nur gemeinsam über die zentrale Antriebswelle antreibbar, sondern auch gemeinsam auf dieser zentralen Antriebswelle angeordnet und bilden somit eine Einheit, die in ein gemeinsames Getriebegehäuse einfassbar ist.

Um die verzweigte Bauweise der als Stand der Technik bekannten Getriebeanordnung kompakter zu gestalten, ist erfindungsgemäß vorgesehen, die Anzahl der Bauteile zu verringern und die Getriebestränge teilweise zusammenzufassen.

Als Vorteile dieser Maßnahmen ergeben sich eine Verringerung des Platzbedarfs sowie eine Kostenersparnis durch die Verringerung der Anzahl der Bauteile. Die reduzierte Bauteilanzahl ermöglicht auch eine schnellere und einfachere Montage.

In einer bevorzugten Ausführungsform ist vorgesehen, dass das Stirnradgetriebe, das Planetengetriebe und das Schaltgetriebe zum Antrieb der Arbeitsaggregate gemeinsam in einem Getriebegehäuse aufgenommen sind. Die drei genannten Getriebe, die in einem gemeinsamen Getriebegehäuse zusammengefasst sind, ergeben ein Zentralgetriebe mit einer vereinfachten und strukturierten Bauweise. Die Zusammenfassung der Antriebe vereinfacht auch die Gestaltung des Antriebs zu den Arbeitsaggregaten.

Weiterhin ist es von Vorteil, wenn auch etwaige zum Ein- und Ausschalten der Arbeitsaggregate vorgesehene Getriebeschaltungen in das Getriebegehäuse integriert sind.

In einer vorteilhaften Ausführung umfasst das Getriebegehäuse des Zentralgetriebes ein erstes Gehäuseteil zur Aufnahme des Stirnradgetriebes und des Planetengetriebes sowie ein zweites Gehäuseteil zur Aufnahme des Schaltgetriebes, wobei Verbindungselemente vorgesehen sind, mit welchen das erste Gehäuseteil mit dem zweiten Gehäuseteil lösbar verbunden ist. Hierdurch wird die Montage erleichtert und etwaige Wartungs- oder Reparaturarbeiten können einfacher durchgeführt werden.

Grundsätzlich kann die Getriebeanordnung so konzipiert sein, dass das in das Zentralgetriebe integrierte Schaltgetriebe nur ein einziges Arbeitsaggregat antreibt. Es kann aber auch vorgesehen sein, dass das Schaltgetriebe mehrere Abgänge hat und damit mehrere Aggregate, beispielweise das Dosierwalzenaggregat und die Förderwalze, antreibt.

Um die Gefahr von Beschädigungen und Maschinenausfällen zu reduzieren kann eine an sich bekannte Überlastsicherung in den Antriebsstrang und in das Getriebegehäuse des Zentralgetriebes integriert sein. Besonders vorteilhaft ist es, wenn diese Überlastsicherung in einem Ölbad gelagert ist.

Die Erfindung wird nachstehend als Beispiel beschrieben und in den Figuren dargestellt.
- Fig. 1: zeigt einen an einen Traktor gekoppelten Ladewagen in einer Seitenansicht;
- Fig. 2: zeigt den in Figur 1 dargestellten Traktor und Ladewagen in einer Draufsicht;
- Fig. 3: zeigt eine schematische Darstellung wesentlicher Bauteile des in den Figuren 1 und 2 dargestellten Ladewagens incl. der Getriebeanordnung;
- Fig. 4: zeigt das in der Getriebeanordnung enthaltende Zentralgetriebe im Einbauzustand an einem ausschnittsweise dargestellten Ladewagen

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

Die Getriebeanordnung ist an einem in den Figuren 1 und 2 schematisch dargestellten Ladewagen 100 angebracht. Eingeleitet wird der Antrieb über ein Eingangsgetriebe 1, das am vorderen Querträger 38 des Ladewagen-Fahrzeugrahmens 37 angeordnet ist und über eine erste Antriebswelle 11, mittels einer Gelenkwelle von der Zapfwelle eines den Ladewagen 100 ziehenden Traktors 90 angetrieben wird.

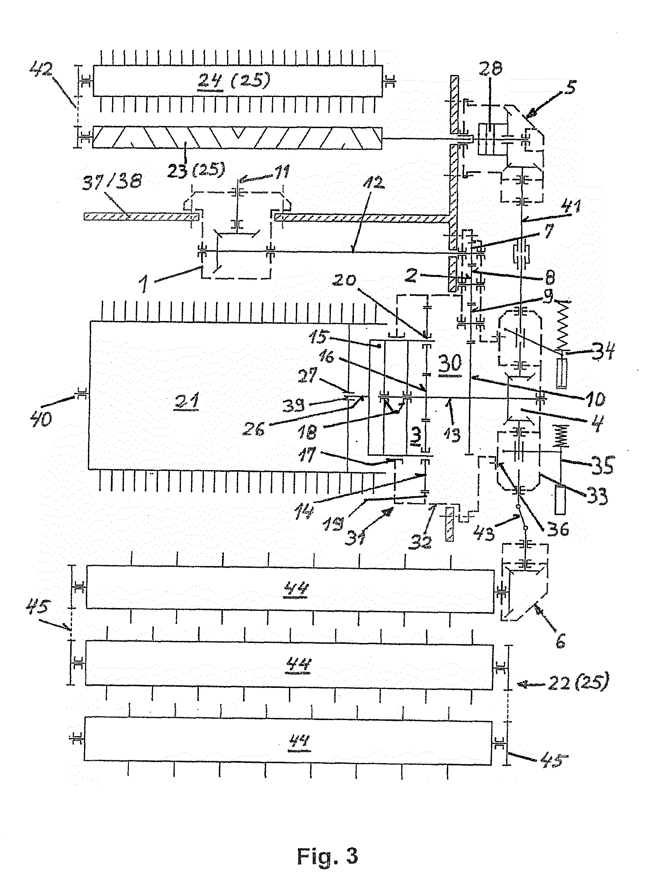

Figur 3 zeigt den schematischen Aufbau der erfindungsgemäßen Getriebeanordnung sowie hiervon angetriebener Aggregate. Über eine zweite Antriebswelle 12 treibt das Eingangsgetriebe 1 ein schmales Stirnradgetriebe 2 an. Das Stirnradgetriebe 2 umfasst ein Ritzel 7, Zwischenräder 8 und 9 und ein Antriebsrad 10, welches auf einer zentralen Antriebswelle 13 fest angeordnet ist. Das Stirnradgetriebe 2 treibt somit die zentrale Antriebswelle 13 an. Diese trägt auf der zum Ladewagen gerichteten Seite das Sonnenrad 16 eines Planetengetriebes 3 und ist weiterhin auf der nach außen gerichteten Seite an ein Schaltgetriebe 4 gekoppelt. Das Stirnradgetriebe 2, das Planetengetriebe 3 und das Schaltgetriebe 4 bilden gemeinsam ein Zentralgetriebe 30. Die drei Getriebe 2, 3 und 4 sind gemeinsam in einem Getriebegehäuse 31, welches durch Gehäuseteilen 32 und 33 gebildet wird, untergebracht.

Das Sonnenrad 16 ist im Planetenradträger 15 in der Lagerung 18 gelagert. Der Planetenradträger 15 ist in einer Lagerung 17 im Gehäuseteil 32 des Getriebegehäuses 31 gelagert. Die mittels der Lager 20 auf dem Planetenradträger 15 angeordneten Planetenräder 14 greifen mit ihren Verzahnungen in die Verzahnung des Sonnenrads 16 und in die Innenverzahnung des fest mit dem Gehäuseteil 32 verbundenen Hohlrades 19 ein.

Über den Abtriebszapfen 26 des Planetenradträgers 15 wird über eine formschlüssige Kupplung 27 ein Förderrotor 21 mit dem Planetenradträger 15 angetrieben, wobei der Förderrotor 21 auf dem Antriebszapfen vom Lager 39 getragen wird. Ein weiteres Lager 40 des Förderrotors 21 befindet sich auf der entgegengesetzten Seite und wird vom Fahrzeugrahmen getragen.

Das Planetengetriebe 3 und das Stirnradgetriebe 2 sind im Gehäuseteil 32 angeordnet, das Schaltgetriebe 4 ist aus Montagegründen in dem Gehäuseteil 33 untergebracht. Die Gehäuseteile 32 und 33 sind mittels von Verbindungselementen 36, vorzugsweise Schraubverbindungen, lösbar miteinander verbunden.

Vom Schaltgetriebe 4 führt eine Wellenverbindung 41 zu einem Winkelgetriebe 5, der Abtrieb erfolgt zu einer Fördertrommel 23, welche über einen Kettentrieb 42 die Pick-up 24 antreibt. Gegen Überlastung der Pick-up 24 bei der Futteraufnahme ist eine vorzugsweise im Ölbad arbeitende Überlastungssicherung 28 im Winkelgetriebe 5 vorgesehen.

Weiterhin führt vom Schaltgetriebe 4 eine Gelenkwellenverbindung 43 zu einem Winkelgetriebe 6, welches ein Arbeitsaggregat 25, hier ein Dosierwalzenaggregat 22, antreibt. Das Dosierwalzenaggregat 22 umfasst drei Dosierwalzen 44, von denen die untere vom Winkelgetriebe 6 angetrieben wird. Weitere Dosierwalzen 44 werden von der unteren Dosierwalze 44 ausgehend, über Kettentriebe 45 angetrieben.

Während der Beladung mit Halm- und Blattgut nimmt der von einem Traktor 90 gezogene und über dessen Zapfwelle angetriebene Ladewagen 100 in bekannter Weise das im Allgemeinen zu Schwaden zusammengelegte Ladegut mit seiner Pick-up 24 vom Boden auf und übergibt es mit Unterstützung der Fördertrommel 23 dem Förderrotor 21, der es in einen Laderaum presst. Die Pickup 24 und der Förderrotor 23 stellen somit weitere Arbeitsaggregate 25 dar.

Zur Vermeidung von Lastspitzen im Antriebsstrang ist eine Überlastsicherung 28 vorgesehen.

Alternativ zu der im Ausführungsbeispiel dargestellten Ausführungsform, kann auch vorgesehen sein, dass der Ladewagen 100 keine Fördertrommel 23 umfasst und das von der Pick-up 24 aufgenommene Erntegut bzw. Futter direkt an den Förderrotor 21 übergeben wird.

Während der Futteraufnahme werden Förderrotor 21 und Pick-up 24 gemeinsam betrieben. Die Pick-up 24 ist hierbei über die Getriebeschaltung 34 eingeschaltet. Bei der Futteraufnahme ist das Dosierwalzenaggregat 22 über die Getriebeschaltung 35 ausgeschaltet.

Beim Entleeren des Laderaumes ist das Dosierwalzenaggregat 22 eingeschaltet und die Pick-up 24 abgeschaltet. Ein im Laderaum des Ladewagens vorgesehener Kratzboden führt den Dosierwalzen 44 das Ladegut in bekannter Weise zu, diese erfassen es und werfen es ab.

**Bezugszeichenliste:**

| | | | |
|---|---|---|---|
| 1 | Eingangsgetriebe | 27 | Kupplung |
| 2 | Stirnradgetriebe | 28 | Überlastsicherung |
| 3 | Planetengetriebe | 29 | |
| 4 | Schaltgetriebe | 30 | Zentralgetriebe |
| 5 | Winkelgetriebe | 31 | Getriebegehäuse |
| 6 | Winkelgetriebe | 32 | Gehäuseteil |
| 7 | Ritzel | 33 | Gehäuseteil |
| 8 | Zwischenrad | 34 | Getriebeschaltung |
| 9 | Zwischenrad | 35 | Getriebeschaltung |
| 10 | Antriebsrad | 36 | Verbindungselement |
| 11 | erste Antriebswelle | 37 | Fahrzeugrahmen |
| 12 | zweite Antriebswelle | 38 | Querträger |
| 13 | Zentral-Antriebswelle | 39 | Lager (Antriebszapfen) |
| 14 | Planetenrad | 40 | Lager (Förderrotor) |
| 15 | Planetenradträger | 41 | Wellenverbindung |
| 16 | Sonnenrad | 42 | Kettentrieb |
| 17 | Lagerung (Planetenträger) | 43 | Gelenkwellenverbindung |
| 18 | Lagerung (Zentral-Antriebswelle) | 44 | Dosierwalze |
| 19 | Hohlrad | 45 | Kettentrieb |
| 20 | Lager (Platenenrad) | | |
| 21 | Förderrotor | 90 | Traktor |
| 22 | Dosierwalzenaggregat | 100 | Ladewagen |
| 23 | Fördertrommel | | |
| 24 | Pick-up | | |
| 25 | Arbeitsaggregat | | |
| 26 | Abtriebszapfen | | |

## Patentansprüche

1. Getriebeanordnung für einen Ladewagen (100) für Halm- und Blattgut, umfassend:
- ein von einer ersten Antriebswelle (11) antreibbares Eingangsgetriebe (1),
- ein über eine zweite Antriebswelle (12) an das Eingangsgetriebe (1) gekoppeltes Stirnradgetriebe (2), welches eine Zentral-Antriebswelle (13) umfasst,
- ein über die Zentral-Antriebswelle (13) an das Stirnradgetriebe (2) gekoppeltes Planetengetriebe (3) zum Antrieb eines Förderrotors (21),
- wenigstens ein von der ersten Antriebswelle (11) antreibbares Winkelgetriebe (5, 6) zum Antrieb eines Arbeitsaggregats (25),
**dadurch gekennzeichnet, dass**
wenigstens ein Arbeitsaggregat (25) über ein Schaltgetriebe (4) an das Stirnradgetriebe (2) gekoppelt ist und über die Zentral-Antriebswelle (13) sowohl das Planetengetriebe (3) als auch das Schaltgetriebe (4) antreibbar sind.

2. Getriebeanordnung nach Anspruch 1, **dadurch gekennzeichnet, dass** Stirnradgetriebe (2), Planetengetriebe (3) und Schaltgetriebe (4) auf der Zentralantriebswelle (13) angeordnet sind.

3. Getriebeanordnung nach Anspruch 1 oder 2, **dadurch gekennzeichnet, dass** es sich bei dem Arbeitsaggregat (25) um ein Dosierwalzenaggregat (22), eine Fördertrommel (23) oder eine Pick-up (24) handelt.

4. Getriebeanordnung nach einem der Ansprüche 1 bis 3, **dadurch gekennzeichnet, dass** das Stirnradgetriebe (2), das Planetengetriebe (3) und das Schaltgetriebe (4) gemeinsam in einem Getriebegehäuse (31) aufgenommen sind und ein Zentralgetriebe (30) ausbilden.

5. Getriebeanordnung nach Anspruch 4, **dadurch gekennzeichnet, dass** in dem Getriebegehäuse (31) wenigstens eins Getriebeschaltung (34, 35) integriert ist.

6. Getriebeanordnung nach Anspruch 4 oder 5, **dadurch gekennzeichnet, dass** das Getriebegehäuse (31) ein erstes Gehäuseteil (32) zur Aufnahme des Stirnradgetriebes (2) und des Planetengetriebes (3) sowie ein zweites Gehäuseteil (33) zur Aufnahme des Schaltgetriebes (4) umfasst und dass Verbindungselemente (36) vorgesehen sind, mit welchen das erste Gehäuseteil (32) mit dem zweiten Gehäuseteil (33) lösbar verbunden ist.

7. Getriebeanordnung nach einem der Ansprüche 1 bis 6, **dadurch gekennzeichnet, dass** das Schaltgetriebe (4) sowohl an das Winkelgetriebe (5) als auch an das Winkelgetriebe (6) gekoppelt ist.

8. Getriebeanordnung nach einem der Ansprüche 1 bis 7, **dadurch gekennzeichnet, dass** wenigstens eine in einem Ölbad gelagerte Überlastsicherung (28) vorgesehen ist.

9. Ladewagen zur Ernte von Halm- und Blattgut umfassend eine Getriebeanordnung nach einem der Ansprüche 1 bis 8.
